# EUROPÄISCHE PATENTSCHRIFT

(11) **EP 2 542 444 B1**
(45) Veröffentlichungstag und Bekanntmachung des Hinweises auf die Patenterteilung: **04.12.2019**
(21) Anmeldenummer: 11704540.1
(22) Anmeldetag: 03.02.2011
(51) Int. Cl.: B60L 3/00, B60L 50/16, B60L 50/60, B60L 53/16, B60L 53/60

(54) **VERFAHREN ZUM LADEN EINER BATTERIE EINES KRAFTFAHRZEUGS MIT ELEKTRISCHEM ANTRIEB**
METHOD FOR CHARGING A BATTERY OF A MOTOR VEHICLE HAVING AN ELECTRIC DRIVE, AND MOTOR VEHICLE HAVING AN ELECTRIC DRIVE
PROCÉDÉ POUR CHARGER UNE BATTERIE D'UN VÉHICULE À MOTEUR DOTÉ D'UN ENTRAÎNEMENT ÉLECTRIQUE ET VÉHICULE À MOTEUR DOTÉ D'UN ENTRAÎNEMENT À MOTEUR

(30) Priorität: 01.03.2010 DE 102010009727
(43) Veröffentlichungstag der Anmeldung: 09.01.2013
(73) Patentinhaber: Audi AG, 85045 Ingolstadt (DE)
(72) Erfinder: THEN, Florian, 85051 Ingolstadt (DE); KRUSE, Alexander, 85051 Ingolstadt (DE); ANDREE, Daniel, 93049 Regensburg (DE); UNGERMANN, Jochen, 85055 Ingolstadt (DE)
(74) Vertreter: Herbst, Matthias Heinz
(86) Internationale Anmeldenummer: PCT/EP2011/000499
(87) Internationale Veröffentlichungsnummer: WO 2011/107197

(56) Entgegenhaltungen:
- EP-A1- 2 108 538
- DE-A1-102008 048 310
- DE-A1-102009 021 720
- DE-A1-102010 011 162
- JP-A- 9 322 313
- JP-A- 10 262 303
- US-A1- 2009 085 522

## Beschreibung

Die Erfindung betrifft ein Verfahren zum Laden einer Batterie eines Kraftfahrzeugs mit elektrischem Antrieb, gegebenenfalls in Kombination mit einer Verbrennungskraftmaschine als Teil eines Hybridantriebs. Zum Laden wird eine Außenanschlusseinrichtung einer Ladestation mit einer Fahrzeuganschlusseinrichtung des Kraftfahrzeugs gekoppelt, wobei sie an dieser verriegelbar ist. Die Erfindung betrifft auch ein Kraftfahrzeug nach dem Oberbegriff des Patentanspruchs 7. Die Mittel zum Verriegeln des Gegenstücks, also der Außenanschlusseinrichtung der Ladestation, an der Anschlusseinrichtung des Kraftfahrzeugs, werden von einer Steuereinrichtung angesteuert.

Eine solche Anordnung ist aus der DE 694 14 772 T2 bekannt. Es ist hierbei eine elektrische Schaltung vorgesehen, die bewirkt, dass ein Verschlussmechanismus zum Halten und Loslassen einer Kupplung betätigt wird, wenn das Laden begonnen hat, und wobei dieser nur losgelassen wird, wenn des Laden abgeschlossen ist. In einer Ausführungsform ist ein Ladeschalter vorgesehen, der auf "EIN" geschaltet werden muss, damit eine Spule erregt wird, die den Verschlussmechanismus betätigt. Der Verschlussmechanismus wird gegebenenfalls auch unter einer zusätzlichen Bedingung betätigt, nämlich wenn eine Kopplung der Anschlusseinrichtungen bereits erfolgt ist. Die Anordnung aus der DE 694 147 72 T2 arbeitet rein elektromechanisch, indem nämlich die Spule erregt wird, wenn eine bestimmte Spannung anliegt, weil der Ladeschalter auf "EIN" geschaltet ist. Derartige Anordnungen sind fehleranfällig.

Überdies ist aus der JP 10 262303 A ein Ladeverfahren für ein Elektrofahrzeug bekannt, wobei ein Ladekabel einer Ladestation an das Elektrofahrzeug angeschlossen wird. Eine Benutzungserlaubnis der Ladestation wird mittels einer Identifizierungskarte überprüft, indem eine Identifizierungskennung mit einer in der Ladestation hinterlegten Identifizierungskennung verglichen wird.

In Abhängigkeit von der Überprüfung der Identifizierungskarte wird das Ladekabel verriegelt.

Des Weiteren ist aus der US 2009/0085522 A1 ein Ladesystem mit einer Batterieladeeinrichtung, einer tragbaren Einrichtung, einer Fahrzeugkommunikationseinrichtung und einer Batterieladekontrolleinrichtung bekannt. Mittels der Batterieladeeinrichtung ist eine Batterie eines Kraftfahrzeugs ladbar. Diese Batterieladeeinrichtung ist mittels der Batterieladekontrolleinrichtung steuerbar, wobei mittels der Batterieladekontrolleinrichtung ein Ladevorgang der Batterie des Kraftfahrzeugs gestartet wird, wenn mittels der tragbaren Einrichtung, welche von dem Fahrer des Kraftfahrzeugs mit sich geführt wird, und der Fahrzeugkommunikationseinrichtung, welche mit der tragbaren Einrichtung kommuniziert, ermittelt wird, dass sich der Fahrer beabstandet zum Kraftfahrzeug befindet.

Es ist Aufgabe der vorliegenden Erfindung, einen Weg aufzuzeigen, wie für eine höhere Sicherheit beim Laden gesorgt werden kann.

Die Aufgabe wird durch ein Verfahren mit den Merkmalen gemäß Patentanspruch 1 gelöst. Gemäß einem weiteren Aspekt wird die Aufgabe durch ein Kraftfahrzeug mit den Merkmalen gemäß Patentanspruch 7 gelöst.

Das Verfahren ist dadurch gekennzeichnet, dass nach zumindest einem vorbestimmten Kriterium überprüft wird, ob eine Bereitschaft zum Laden gegeben ist. Ein Verriegeln der Außenanschlusseinrichtung an der Fahrzeuganschlusseinrichtung erfolgt bei einem Feststellen der Bereitschaft zum Laden, und ein Beginn des Ladens erfolgt erst nach dem Verriegeln. Überdies ist erfindungsgemäß vorgesehen, dass ein von einem Kraftfahrzeugführer am Mann getragener Transponderschlüssel erkannt wird, der Ladevorgang automatisch beendet wird, wenn der Fahrzeugführer mit dem Transponderschlüssel in die Nähe des Kraftfahrzeugs kommt und der Ladevorgang nach einer bestimmten Zeitdauer fortgesetzt wird. Hierbei ist vorgesehen, dass mittels des Steuergeräts der Ladevorgang nach der vorbestimmten Zeitdauer fortgesetzt wird, sofern ein Erfassen, dass der Kraftfahrzeugführer einen Stecker aus einer Buchse zieht und/oder dass der Kraftfahrzeugführer einen Tankdeckel verschließt und/oder dass sonst wie die Fortsetzung des Ladevorgangs unmöglich gemacht wird, durch das Steuergerät unterbleibt.

Die Erfindung stellt somit eine vorgegebene Reihenfolge bereit, insbesondere erfolgt das Verriegeln, bevor das Laden beginnt und geht nicht mit dem Ladevorgang einher, wie dies bei der Anordnung aus der DE 694 14 772 T2 der Fall ist. Dadurch ist für eine erhöhte Sicherheit beim Laden gesorgt, denn wenn das Laden erst einsetzt, nachdem die Verrieglung vorgesehen ist, können die Anschlusseinrichtungen beim Laden nicht mehr voneinander getrennt werden, und gefährliche Situationen sind verhindert.

Bei einer bevorzugten Ausführungsform der Erfindung ist zumindest ein vorbestimmtes Kriterium auf eine Einrichtung des Kraftfahrzeugs bezogen, die von der Fahrzeuganschlusseinrichtung verschieden ist. Bevorzugt sind sogar sämtliche vorbestimmten Kriterien des zumindest einen vorbestimmten Kriteriums auf andere Einrichtungen des Kraftfahrzeugs bezogen. Die Ladebereitschaft wird daher nicht lediglich an der Kopplung der Anschlusseinrichtungen miteinander festgemacht, sondern an anderen Funktionseinheiten des Kraftfahrzeugs.

In diesem Zusammenhang kann vorgesehen sein, dass zum Feststellen der Bereitschaft zum Laden eine Bremsvorrichtung des Kraftfahrzeugs wirksam sein muss, z. B. eine Feststellbremse angezogen sein muss. Genauso kann auch vorgesehen sein, dass ein Betriebszustand-Wahlelement des Kraftfahrzeugs einen vorbestimmten Zustand einnehmen muss. Ist die Bremsvorrichtung wirksam, kann das Kraftfahrzeug beim Laden nicht wegrollen, so dass vermieden ist, dass durch ein solches Wegrollen eine gefährliche Situation entsteht. Gleichermaßen kann der vorbestimmte Zustand des Betriebszustand-Wahlelements derart gewählt sein, dass das Kraftfahrzeug sicher und zuverlässig steht, gegebenenfalls auch elektronische Funktionseinheiten an das Laden angepasst sind. Ein Beispiel für einen Betriebszustand-Wahlelement ist ein Wahlelement, insbesondere in Form eines Wahlhebels, für eine Automatikschaltung. Unterschiedliche Stellungen entsprechen unterschiedlichen Zuständen. Es gibt insbesondere eine solche Stellung, die für das Parken des Kraftfahrzeugs vorgesehen ist. Bei Verwendung eines herkömmlichen Getriebes entspricht diese Parkstellung einer Getriebesperre, so dass das Kraftfahrzeug nicht bewegt werden kann. Bei Kraftfahrzeugen mit elektrischem Antrieb sind analoge Vorrichtungen vorstellbar.

Alternativ oder zusätzlich kann vorgesehen sein, dass zum Feststellen der Bereitschaft zum Laden ein vorbestimmtes Signal von außerhalb des Kraftfahrzeugs an selbiges übermittelt worden sein muss. Es kann z. B. vorgesehen sein, dass der Energieversorger, von dem die elektrische Energie bezogen wird, auf diese Weise den Ladevorgang überhaupt erst freigibt. Dies kann z. B. nach einem Vorab-Bezahlen der Energie an der Ladestation erfolgen.

Ferner ist es alternativ oder zusätzlich möglich, dass zum Feststellen der Bereitschaft zum Laden die zu ladende Batterie und/oder andere elektrische Funktionseinheiten des Kraftfahrzeugs einen vorbestimmten Zustand einnehmen müssen, und dass eben zu diesem Feststellen ein entsprechendes Signal an eine geeignete Einheit abgegeben worden sein muss. Geben die Batterie bzw. andere elektrische Funktionseinheiten oder auch Steuereinrichtungen für die Batterie bzw. die Funktionseinheiten derartige Signale ab, mit denen eine Bereitschaft für das Laden mitgeteilt wird, so ist zuverlässig dafür gesorgt, dass der Ladevorgang nach einem vorgegebenen Muster und daher sicher durchlaufen wird.

Bevorzugt ist eine Steuereinheit vorgesehen, die das Verriegeln bewirkt. Sie ist dazu ausgelegt, das Erfülltsein eines vorbestimmten Kriteriums anhand von zumindest einem empfangenen Signal festzustellen. Auf diese Weise können Sensoren verwendet werden, die Zustände feststellen; z. B. kann ein Sensor erfassen, dass die Bremsvorrichtung wirksam ist. Solche Sensoren stehen häufig ohnehin zur Verfügung oder jedenfalls können die von ihnen bereitgestellten Informationen anderweitig genutzt werden. Es wird bewusst daher davon abgegangen, eine rein elektrische Schaltung aufgrund von mechanischen Elementen zu betätigen, was fehleranfällig ist.

Dem Fahrzeugführer kann das Verriegeln durch eine Signalausgabe mitgeteilt werden, akustisch oder durch Lichtabgabe von z. B. einer Leuchtdiode.

Ein weiterer Aspekt der Erfindung betrifft ein Kraftfahrzeug mit zumindest einem elektrischem Antrieb und einer Batterie, mit einer Fahrzeuganschlusseinrichtung, welche zum Laden der Batterie mit einer Außenanschlusseinrichtung einer Ladestation koppelbar und an dieser verriegelbar ist, und mit einem Steuergerät, welches dazu ausgelegt ist, nach zumindest einem vorbestimmten Kriterium zu überprüfen, ob eine Bereitschaft zum Laden gegeben ist, und die Außenanschlusseinrichtung an der Fahrzeuganschlusseinrichtung bei Feststellen der Bereitschaft zum Laden zu verriegeln, wobei das Laden nach dem Verriegeln beginnt. Erfindungsgemäß ist das Steuergerät mit einer Einheit gekoppelt, welche dazu ausgelegt ist, einen von einem Kraftfahrzeugführer am Mann getragenen Transponderschlüssels zu erkennen Des Weiteren erfindungsgemäß ist das Steuergerät dazu ausgelegt, den Ladevorgang automatisch zu beenden, wenn der Fahrzeugführer mit dem Transponderschlüssel in die Nähe des Kraftfahrzeugs kommt, und den Ladevorgang nach einer vorbestimmten Zeitdauer fortzusetzen. Hierbei ist vorgesehen, dass das Steuergerät dazu eingerichtet ist, den Ladevorgang nach der vorbestimmten Zeitdauer fortzusetzen, sofern ein Erfassen, dass der Kraftfahrzeugführer einen Stecker aus einer Buchse zieht und/oder dass der Kraftfahrzeugführer einen Tankdeckel verschließt und/oder dass sonst wie die Fortsetzung des Ladevorgangs unmöglich gemacht wird, durch das Steuergerät unterbleibt

In einer Weiterbildung der Erfindung ist vorgesehen, dass die Steuereinrichtung dazu ausgelegt ist, Signale von Funktionseinheiten des Kraftfahrzeugs zu erhalten und in Abhängigkeit von solchen Signalen nach zumindest einem vorbestimmten Kriterium eine Ladebereitschaft festzustellen und ein Verriegeln zu bewirken (insbesondere, bevor ein Ladevorgang beginnt).

Das Kraftfahrzeug hat ebenfalls den Vorteil, dass dem Fahrzeugführer das Verriegeln durch eine Signalausgabe mitgeteilt werden kann, akustisch oder durch Lichtabgabe von z. B. einer Leuchtdiode.

Nachfolgend wird die Erfindung am Beispiel der Verwirklichung in einem Fahrzeug mit elektrischem Antrieb näher beschrieben. Hierbei werden weitere Ideen dargestellt, die gleichzeitig in demselben Kraftfahrzeug verwirklicht sein können. Die Darstellung erfolgt unter Bezug auf die Zeichnungen, in der
- Fig. 1: schematisch ein Kraftfahrzeug mit elektrischem Antrieb veranschaulicht, bei dem die vorliegende Erfindung einsetzbar ist,
- Fig. 2: ein Prinzipschaubild zur Erläuterung eines Initiierungsvorgangs vor dem Koppeln einer Ladestation ist,
- Fig. 3: ein Prinzipschaubild zur Erläuterung eines Initiierungsvorgangs nach Ankoppeln einer Ladestation, aber vor dem Laden ist,
- Fig. 4: ein Prinzipschaubild zur Erläuterung eines Verfahrens zum Beenden des Ladevorgangs ist,
- Fig. 5a und 5b: Prinzipschaubilder zur Erläuterung eines Verfahrens zur Herstellung einer Fahrbereitschaft des Kraftfahrzeugs nach Beendigung eines Ladevorgangs sind,
- Fig. 6: schematisch ein Schloss für einen Schlüssel eines Kraftfahrzeugs und über dieses Schloss ansteuerbare Einheiten veranschaulicht,
- Fig. 7: einen Zeitablauf im Zusammenhang mit einem Ladevorgang anhand eines Zeitstrahles veranschaulicht, wobei unterschiedliche Zeiten und Zeitspannen den unterschiedlichen Schaubildern aus den Fig. 2 bis 6 zugeordnet sind.

Ein im Ganzen mit 100 bezeichnetes Kraftfahrzeug mit einem elektrischen Antrieb 10 soll von einem Fahrer 12 bedienbar sein. Zur Versorgung des elektrischen Antriebs 10 mit elektrischer Energie umfasst das Fahrzeug 100 eine Batterie 14. Diese ist mit einer Buchse 16 mit elektrischen Kontakten gekoppelt, über die die Batterie 14 geladen werden kann. Neben dem elektrischen Antrieb kann ein Verbrennungsmotor (nicht gezeigt) vorgesehen sein, dann ist der elektrische Antrieb Teil eines Hybridantriebs.

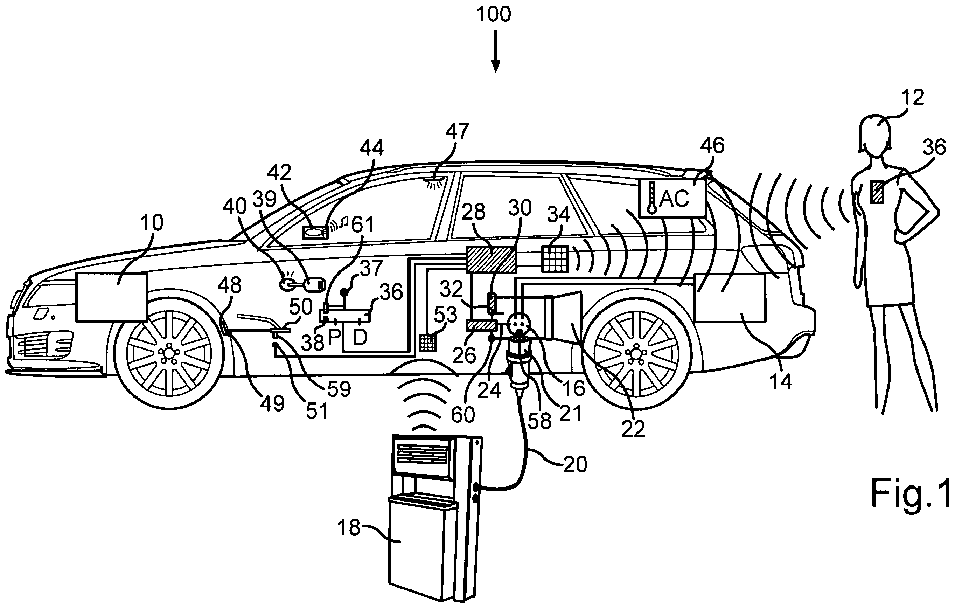

Zum Laden wird das Kraftfahrzeug 100 an eine Ladestation 18 gefahren, von der eine in Fig. 1 mit 20 bezeichnete und schematisch gezeigte Leitung mit einem Stecker 21 mit der Ladebuchse 16 gekoppelt wird, indem der Stecker 21 eingesteckt wird. Im normalen Zustand während der Fahrt des Kraftfahrzeugs ist die Buchse 16 von einem Tankdeckel 22 verschlossen; in Fig. 1 ist dieser im geöffneten Zustand gezeigt.

Steckt der Stecker 21 in der Ladebuchse 16, so lässt sich die Verbindung durch ein schematisch gezeigtes Verriegelungselement 24 verriegeln, wobei ein Aktuator 26 das Verriegelungselement 24 betätigt. Der Aktuator 26 wird von einem Steuergerät 28 angesteuert. Dasselbe Steuergerät steuert auch einen Aktuator 30 für eine Verriegelung 32, die den Tankdeckel 22 während des Betriebs verriegelt. Das Steuergerät 28 ist auch mit einer Einheit 34 gekoppelt, welche selbsttätig einen von dem Kraftfahrzeugführer am Mann getragenen Transponderschlüssel 36 erkennt, für die so genannte Funktion des "Keyless Entry", also das automatische Entriegeln der Kraftfahrzeugtüren, wenn sich der Kraftfahrzeugführer 12 mit dem Transponderschlüssel 36 in die Nähe des Kraftfahrzeugs begibt.

Das Kraftfahrzeug 100 weist eine Schaltung 36 auf, mit der Betriebszustände wählbar sind, insbesondere wahlweise das Kraftfahrzeug in den Zustand zum Fahren verbracht wird ("D"), oder in einen Parkzustand verbracht wird ("P"), bei dem z. B. ein Getriebe verriegelt ist. Die Schaltung 36 umfasst einen Wahlhebel 37. Dessen Stellung wird durch einen Sensor 38 erfasst.

Mit Hilfe eines herkömmlichen Schlüssels 39 lässt sich über ein Schloss 40 das Kraftfahrzeug ansteuern, insbesondere darin befindliche elektrische Geräte sowie der elektrische Antrieb 10 selbst. Als Beispiel für elektrische Geräte seien ein Navigationssystem 42 sowie ein Radio mit Lautsprecher 44 genannt. Auch eine Klimaanlage 46 lässt sich über das Schloss 40 in Betrieb setzen, genauso eine Innenbeleuchtung/Lampe 47. Schließlich verfügt das Kraftfahrzeug 100 noch über eine Feststellbremse 48, welche über einen Betätigungshebel 50 angelegt werden kann, indem dieser Hebel gezogen wird. Ein Sensor 49 an der Feststellbremse 48 und ein Sensor 51 an dem Betätigungshebel 50 erfassen den Zustand "Bremse angelegt". Die Feststellbremse 48 ist durch einen Riegel 59 im angezogenen Zustand blockierbar, der Wahlhebel 37 durch einen Riegel 61 in der Parkstellung blockierbar.

Ein Funkempfänger 53 kann externe Signale empfangen.

Es wird nachfolgend beschrieben, wie der Vorgang eines Ladens des Kraftfahrzeugs 100 durch die Ladestation 18 durchlaufen wird.

Zunächst einmal muss der Kraftfahrzeugführer 12 das Kraftfahrzeug 100 zur Ladestation 18 bewegen. Damit die Ladestation 18 über die Leitung 20 mit der Buchse 16 gekoppelt werden kann, muss der Tankdeckel 22 geöffnet werden. Im Grundzustand, während des normalen Fahrbetriebs des Kraftfahrzeugs 100, ist der Tankdeckel 22 durch das Verriegelungselement 32 geschlossen .

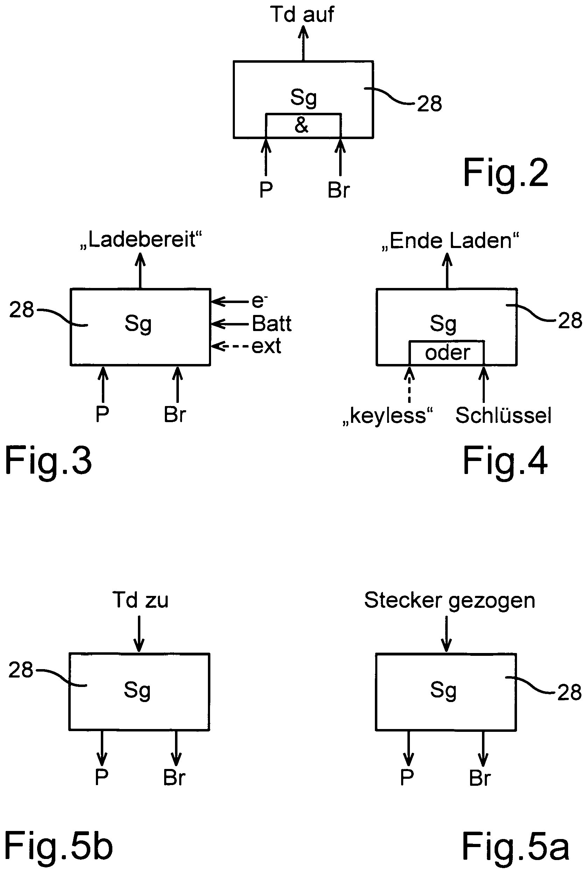

Vorliegend soll der Tankdeckel 22 erst dann verriegelt werden, wenn der Wahlhebel 37 der Automatikschaltung 36 in der Parkstellung "P" steht. Dies wird durch den Sensor 38 erfasst. Gleichzeitig soll die Feststellbremse 48 anliegen, also der Betätigungshebel 50 gezogen sein. Dies wird durch die Sensoren 49 und 51 erfasst. Ist sowohl die Stellung "P" erreicht, als auch die Bremse gezogen ("BR"), so wird gemäß Fig. 2 durch das Steuergerät 28 der Aktuator 30 dazu gebracht, den Tankdeckel 22 zu entriegeln ("Td auf").

Wenn die Parkstellung des Automatikgetriebes 36 eingestellt ist und gleichzeitig die Feststellbremse 48 anliegt, ist ein Wegrollen des Kraftfahrzeugs wirksam unterbunden. Dann ist ein sicherer Zustand hergestellt, in dem die Ladestation 18 mit der Ladebuchse 16 über einen Stecker gekoppelt werden kann. Ist diese Sicherheit nicht gegeben, ist eine Verbindung nicht möglich, weil der Tankdeckel 22 geschlossen bleibt.

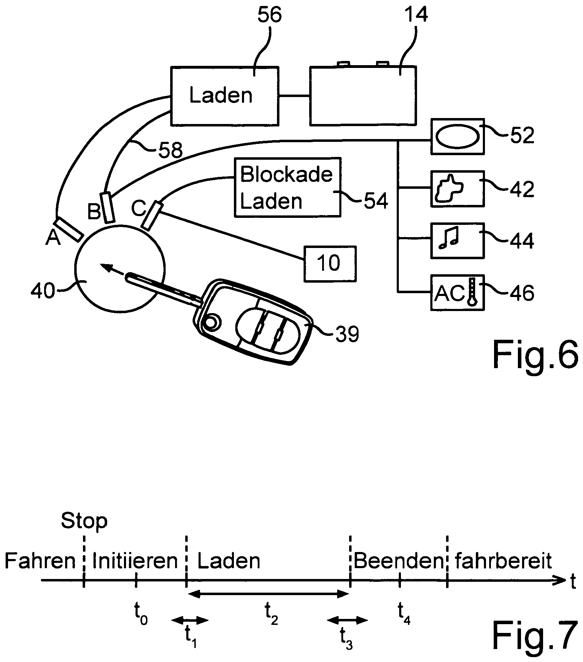

Der anhand von Fig. 2 beschriebene Vorgang wird insbesondere während einer Initiierungsphase zu einem in Fig. 7 beispielhaft gezeigten Zeitpunkt t₀ durchgeführt.

Nach Beendigung des Vorgangs gemäß Fig. 2 kann der Stecker 21 in die Buchse 16 eingesteckt werden.

Nun soll gewährleistet sein, dass dieser Stecker 21 während des Ladens nicht unvermittelt herausgezogen wird, denn dann könnte die Batterie 14 oder auch die Ladestation 18 Schaden nehmen, und auch eine den Stecker 21 herausziehende Person wäre gefährdet. Aus diesem Grund wird der Stecker 21 während des Ladens durch die Verriegelungseinheit 24 verriegelt.

Das Verriegeln erfolgt vor dem Einsetzen des eigentlichen Ladens unter vorbestimmten Bedingungen, die nachfolgend anhand von Fig. 3 erläutert werden:
Nach wie vor soll der Wahlhebel 37 in der Parkstellung ("P") sein, und die Feststellbremse 48 soll wirksam sein ("BR"). Dies wird durch die Sensoren 38 und 49, 51 erfasst. Gleichzeitig soll die Batterie 14 in einen bestimmten Zustand versetzt sein ("BATT"), und auch weitere elektrische Einrichtungen ("e⁻") sollen in einem solchen Zustand sein, dass sie durch den Ladevorgang nicht in ihrem Betrieb beeinträchtigt oder beschädigt werden. Schließlich kann zusätzlich vorgesehen sein, dass ein externes Signal ("ext") beim Funkempfänger 53 eingeht, insbesondere von der Ladestation 18, demgemäß eine Freigabe für das Laden erfolgt ist. Ein solches Freigabesignal kann beispielsweise dann abgegeben werden, wenn der Fahrzeugführer 12 vorab eine bestimmte Menge an Energie (kWh) bezahlt hat. Erst, wenn diese Bedingungen sämtlich erfüllt sind, stellt das Steuergerät 28 ("SG") den Zustand der Ladebereitschaft fest. Erst dann wird ein Stromfluss von der Ladestation 18 zur Batterie 14 über die Buchse 16 ermöglicht.

Der anhand der Fig. 3 erläuterte Vorgang erfolgt im Übergang von der Phase einer Initiierung zur Phase des Ladens zu einem Zeitpunkt t₁, siehe die verschiedene Möglichkeiten für den Zeitpunkt t₁ angehende Zeitspanne in Fig. 7.

Es kann nun sein, dass sich der Fahrzeugführer 12 während des Ladens in das Kraftfahrzeug 100 begeben möchte und dort Funktionen des Kraftfahrzeugs nutzen möchte.

Es ist bekannt, dass Schlösser nach Art des in Fig. 6 näher gezeigten Schlosses 40 ermöglichen, dass ein Schlüssel 39 in drei unterschiedliche Stellungen A, B und C verbringbar sind. Die Stellung A entspricht einem Stillstand des Kraftfahrzeugs und einem Ausgeschaltetsein sämtlicher Geräte, also einem Ruhe-Betriebszustand. In der Stellung B fährt das Kraftfahrzeug, der Antrieb 10 ist also eingeschaltet, das Kraftfahrzeug befindet sich im Fahr-Betriebszustand, wenn zuvor der Schlüssel in Stellung C gebracht wurde. Die Stellung B kann eine Zwischenstellung sein. Bei Kraftfahrzeugen mit Verbrennungskraftmaschine entspricht dieser Zwischenstellung B die so genannte "Klemme 15" ein. In der Zwischenstellung sind das Navigationsgerät 42 und das Radio 44 sowie die Klimaanlage 46 sowie gegebenenfalls ein Bildschirm 52, insbesondere für ein Fernseher, mit Strom versorgt und können in Betrieb gesetzt sein. Ferner kann die Lampe 47 der Innenbeleuchtung zum Leuchten gebracht werden.

Es versteht sich von selbst, dass kein Übergang während des Ladevorgangs nach Zustand C möglich ist, indem eine Einheit 54 für eine Blockade des Ladens sorgt. Umgekehrt sorgt bei der Stellung A und B des Schlüssels eine Einheit 56 dafür, dass die Batterie 14 geladen wird.

Vorliegend soll auch bei Stellung B eine Verbindung 58 zur Einheit 56 hergestellt sein, damit auch bei dieser Zwischenstellung B ein Laden durch die Einheit 56 ermöglicht ist.

Somit können während des Ladens das Navigationsgerät 42, das Radio 44, die Klimaanlage 46, die Lampe 47 und der Bildschirm 52 in Betrieb gehalten werden. Der Fahrzeugführer 12, der sich im Kraftfahrzeug 100 befindet, erfährt eine angenehme Klimatisierung des Kraftfahrzeugs, kann das vollständige Infotainmentsystem des Kraftfahrzeugs 100 nutzen, und dieses ist genügend gut beleuchtet.

Der anhand von Fig. 6 erläuterte Zustand kann zu beliebigen Zeitpunkten t₂ während des Ladens eingestellt sein, vgl. Fig. 7.

Das Laden einer elektrischen Batterie 14 dauert verhältnismäßig lange, insbesondere mehrere Stunden. Es kann nun sein, dass ein Kraftfahrzeugführer 12 das Laden vorzeitig beenden möchte. Dies wird vorliegend durch eine in dem Kraftfahrzeug 100 bereitgestellte Funktionalität erleichtert: Die Einheit 34 erfasst, wenn der Benutzer 12 mit dem für die Funktionalität des "Keyless-Go" bereitgestellten Transponderschlüssel 36 in die Nähe des Kraftfahrzeugs 100 kommt. Dies wird dem Steuergerät 28 über Signale mitgeteilt. Das Steuergerät 28 beendet dann automatisch den Ladevorgang ("Ende Laden") und z. B. wird auch das Verriegelungselement 24 durch den Aktuator 26 entriegelt.

Gleichermaßen kann der Ladevorgang beendet werden, wenn der Kraftfahrzeugführer 12 mit Hilfe eines herkömmlichen Schlüssels das Kraftfahrzeug entweder öffnet oder diesen Schlüssel 39 in das Schloss 40 steckt.

Naturgemäß möchte nicht jeder Kraftfahrzeugführer 12, der in die Nähe seines Kraftfahrzeugs 100 beim Ladevorgang kommt, den Ladevorgang beenden. Aus diesem Grund wird erfasst, ob der Fahrzeugführer 12 nachfolgend den Stecker aus der Buchse 16 zieht, oder ob er den Tankdeckel 22 verschließt, ob nach wie vor Strom zur Batterie 14 fließt, oder ob sonst wie die Fortsetzung des Ladevorgangs unmöglich gemacht wird. Erfasst das Steuergerät 28 derartiges nicht, so wird das Laden nach einer vorbestimmten Zeitdauer wieder aufgenommen und der Ladevorgang fortgesetzt.

Der anhand von Fig. 4 erläuterte Vorgang erfolgt zu einem Zeitpunkt t₃ während einer in Fig. 7 dargestellten Zeitdauer im Übergang vom Laden zum Beenden des Ladens.

Es soll nun verhindert werden, dass ein Kraftfahrzeugführer das Kraftfahrzeug in Betrieb nimmt, während die Ladestation 18 weiter mit dem Kraftfahrzeug 100 gekoppelt ist. Aus diesem Grund ist vorgesehen, dass ein Verbringen des Wahlhebels 37 aus der Parkstellung "P" der Automatikschaltung 36 heraus zunächst nicht möglich, z. B. weil der Wahlhebel 37 in der Parkstellung "P" mit dem Riegel 61 verriegelt ist. Genauso wird durch den Riegel 59 verhindert, dass die Feststellbremse 48 gelöst wird.

Bei einer Alternative wird diese Verriegelung aufgehoben, wenn der Stecker aus der Buchse 16 gezogen ist, was durch einen geeigneten Sensor 58 erfasst werden kann. Wie in Fig. 5a gezeigt, wird erst nach Ziehen des Steckers der Wahlhebel 37 wieder freigegeben bzw. die Bremse "BR" wieder lösbar gemacht.

Alternativ kann vorgesehen sein, dass zunächst der Tankdeckel 22 geschlossen werden muss, was z. B. durch einen Sensor 68 erfasst werden kann, und das Steuergerät 28 bewirkt erst bei geschlossenem Tankdeckel, dass der Wahlhebel 37 aus der Parkstellung "P" herausbewegt werden kann und die Feststellbremse 48 gelöst werden kann ("BR").

Der anhand der Fig. 5a und 5b erläuterte Vorgang erfolgt während einer Phase des Beendens des Ladens, z. B. zum in der Fig. 7 beispielhaft gezeigten Zeitpunkt t₄.

Anschließend ist das Kraftfahrzeug fahrbereit, und es kann mit geladener Batterie 14 der elektrische Antrieb 10 wieder in Betrieb gesetzt werden.

## Patentansprüche

1. Verfahren zum Laden einer Batterie (14) eines Kraftfahrzeugs (100) mit elektrischem Antrieb (10), wobei zum Laden eine Außenanschlusseinrichtung (20) einer Ladestation (18) mit einer Fahrzeuganschlusseinrichtung (16) des Kraftfahrzeugs (100) gekoppelt wird und an dieser verriegelbar ist, mit den Schritten:
- Überprüfen nach zumindest einem vorbestimmten Kriterium, ob eine Bereitschaft zum Laden gegeben ist,
- Verriegeln der Außenanschlusseinrichtung (20) an der Fahrzeuganschlusseinrichtung (16) bei Feststellen der Bereitschaft zum Laden,
- Beginnen des Ladens nach dem Verriegeln,
**gekennzeichnet durch** die Schritte:
- Erkennen eines von einem Kraftfahrzeugführer (12) am Mann getragenen Transponderschlüssels (36),
- Automatisches Beenden des Ladevorgangs, wenn der Fahrzeugführer (12) mit dem Transponderschlüssel (36) in die Nähe des Kraftfahrzeugs (100) kommt,
- Fortsetzen des Ladevorgangs mittels eines Steuergeräts (28) nach einer vorbestimmten Zeitdauer, sofern ein Erfassen, dass der Kraftfahrzeugführer (12) einen Stecker (21) aus einer Buchse (16) zieht und/oder dass der Kraftfahrzeugführer (12) einen Tankdeckel (22) verschließt und/oder dass sonst wie die Fortsetzung des Ladevorgangs unmöglich gemacht wird, durch das Steuergerät (28) unterbleibt.

2. Verfahren nach Anspruch 1, bei dem zumindest ein vorbestimmtes Kriterium auf eine Einrichtung des Kraftfahrzeugs (100) bezogen ist, die von der Fahrzeuganschlusseinrichtung (16) verschieden ist.

3. Verfahren nach Anspruch 1 oder 2, bei dem zum Feststellen der Bereitschaft zum Laden eine Bremsvorrichtung (48) des Kraftfahrzeugs (100) wirksam sein muss und/oder ein Betriebszustand-Wahlelement (37) des Kraftfahrzeugs (100) einen vorbestimmten Zustand einnehmen muss.

4. Verfahren nach einem der vorhergehenden Ansprüche, bei dem zum Feststellen der Bereitschaft zum Laden ein vorbestimmtes Signal ("ext") von außerhalb des Kraftfahrzeugs an dieses übermittelt worden sein muss oder werden kann.

5. Verfahren nach einem der vorhergehenden Ansprüche, bei dem zum Feststellen der Bereitschaft zum Laden die zu ladende Batterie und/oder eine andere elektrische Funktionseinheit des Kraftfahrzeugs einen vorbestimmten Zustand einnehmen muss bzw. müssen und hierzu ein entsprechendes Signal abgegeben worden sein muss.

6. Verfahren nach einem der vorhergehenden Ansprüche, bei dem das Steuergerät (28) das Verriegeln bewirkt, welches ausgelegt ist, das Erfülltsein eines vorbestimmten Kriteriums anhand von zumindest einem empfangenen Signal festzustellen.

7. Kraftfahrzeug (100) mit zumindest einem elektrischem Antrieb (10) und einer Batterie (14), mit einer Fahrzeuganschlusseinrichtung (16), welche zum Laden der Batterie (14) mit einer Außenanschlusseinrichtung (20) einer Ladestation (18) koppelbar und an dieser verriegelbar ist, mit einem Steuergerät (28), welches dazu ausgelegt ist,
- nach zumindest einem vorbestimmten Kriterium zu überprüfen, ob eine Bereitschaft zum Laden gegeben ist, und
- die Außenanschlusseinrichtung (20) an der Fahrzeuganschlusseinrichtung (16) bei Feststellen der Bereitschaft zum Laden zu verriegeln, wobei das Laden nach dem Verriegeln beginnt,
**dadurch gekennzeichnet, dass**
das Steuergerät (28) mit einer Einheit (34) gekoppelt ist, welche dazu ausgelegt ist, einen von einem Kraftfahrzeugführer (12) am Mann getragenen Transponderschlüssel (36) zu erkennen, und dass das Steuergerät (28) dazu ausgelegt ist, den Ladevorgang automatisch zu beenden, wenn der Fahrzeugführer (12) mit dem Transponderschlüssel (36) in die Nähe des Kraftfahrzeugs (100) kommt, und den Ladevorgang nach einer vorbestimmten Zeitdauer fortzusetzen, sofern ein Erfassen, dass der Kraftfahrzeugführer (12) einen Stecker (21) aus einer Buchse (16) zieht und/oder dass der Kraftfahrzeugführer (12) einen Tankdeckel (22) verschließt und/oder dass sonst wie die Fortsetzung des Ladevorgangs unmöglich gemacht wird, durch das Steuergerät (28) unterbleibt.

8. Kraftfahrzeug (100) nach Anspruch 7, bei dem das Steuergerät (28) dazu ausgelegt ist, Signale von Funktionseinheiten (38; 49, 51; 53) des Kraftfahrzeugs (100) zu erhalten und in Abhängigkeit von solchen Signalen nach dem zumindest einen vorbestimmten Kriterium die Ladebereitschaft festzustellen und das Verriegeln zu bewirken

## Claims

1. Method for charging a battery (14) of a motor vehicle (100) with an electric drive (10), wherein, for charging, an external connecting device (20) of a charging station (18) is coupled with a vehicle connecting device (16) of the motor vehicle (100) and is latchable on this, with the steps of:
- checking, according to at least one predetermined criterion, whether readiness for charging exists,
- latching of the external connecting device (20) on the vehicle connecting device (16) upon the establishing of readiness for charging,
- starting of charging after latching,
**characterised by** the steps of:
- identifying of a transponder key (36) carried, on the person, by a motor vehicle driver (12),
- automatic ending of the charging process, when the vehicle driver (12) comes close to the motor vehicle (100) with the transponder key (36),
- continuation of the charging process by means of a control device (28) after a predetermined length of time, provided that there is no recognising by the control device (28), that the motor vehicle driver (12) pulls a plug (21) out of a bush (16) and/or that the motor vehicle driver (12) locks a tank cap (22) and/or that the continuation of the charging process is otherwise rendered impossible.

2. Method according to claim 1, in which at least one predetermined criterion is applied to a device of the motor vehicle (100) that is different from the vehicle connecting device (16).

3. Method according to claim 1 or 2, in which, to detect the readiness for charging, a braking device (48) of the motor vehicle (100) must be effective and/or an operating-state selection element (37) of the motor vehicle (100) must adopt a predetermined state.

4. Method according to any one of the preceding claims, in which, to detect the readiness for charging, a predetermined signal ("ext") from outside the motor vehicle must have been or can be transmitted to said motor vehicle.

5. Method according to any one of the preceding claims, in which, to detect the readiness for charging, the battery to be charged and/or any other electrical functional unit of the motor vehicle must adopt a predetermined state and to this end a corresponding signal must have been emitted.

6. Method according to any one of the preceding claims, in which the control device (28) brings about the latching, which is designed to detect the fulfilment of a predetermined criterion on the basis of at least one received signal.

7. Motor vehicle (100) with at least one electric drive (10) and one battery (14), with a vehicle connecting device (16), which, for charging of the battery (14), is couplable with an external connecting device (20) of a charging station (18) and is latchable on this, with a control device (28) that is designed
- to check, according to at least one predetermined criterion, whether readiness for charging exists, and
- to latch the external connecting device (20) on the vehicle connecting device (16) upon the establishing of readiness for charging, whereby the charging begins after the latching,
**characterised in that**
the control device (28) is coupled with a unit (34) that is designed to identify a transponder key (36) carried, on the person, by a motor vehicle driver (12), and that the control device (28) is designed to end the charging process automatically, when the vehicle driver (12) comes close to the motor vehicle (100) with the transponder key (36), and to continue the charging process after a predetermined length of time, provided that there is no recognising by the control device (28), that the motor vehicle driver (12) pulls a plug (21) out of a bush (16) and/or that the motor vehicle driver (12) locks a tank cap (22) and/or that the continuation of the charging process is otherwise rendered impossible.

8. Motor vehicle (100) according to claim 7, in which the control device (28) is designed to receive signals from functional units (38; 49, 51; 53) of the motor vehicle (100) and, depending on such signals, to detect the readiness for charging according to the at least one predetermined criterion and to bring about the latching.

## Revendications

1. Procédé de chargement d'une batterie (14) d'un véhicule automobile (100) avec un entraînement électrique (10), dans lequel pour le chargement un dispositif de raccordement extérieur (20) d'un poste de chargement (18) est couplé à un dispositif de raccordement de véhicule (16) du véhicule automobile (100) et peut être verrouillé au niveau de celui-ci, avec les étapes de :
- la vérification selon au moins un critère prédéterminé si un mode prêt au chargement est donné,
- le verrouillage du dispositif de raccordement extérieur (20) au niveau du dispositif de raccordement de véhicule (16) lors de la détermination du mode prêt au chargement,
- le commencement du chargement après le verrouillage,
**caractérisé par** les étapes de :
- la reconnaissance d'une clé de transpondeur (36) portée par un conducteur de véhicule automobile (12) en cas de besoin,
- la fin automatique du processus de chargement lorsque le conducteur de véhicule (12) entre avec la clé de transpondeur (36) à proximité du véhicule automobile (100),
- la poursuite du processus de chargement au moyen d'un appareil de commande (28) après une durée prédéterminée dans la mesure où une détection que le conducteur de véhicule automobile (12) retire une fiche (21) d'une douille (16) et/ou que le conducteur de véhicule automobile (12) ferme un bouchon de réservoir (22) et/ou qu'autrement la poursuite du processus de chargement est rendue impossible, est cessée par l'appareil de commande (28).

2. Procédé selon la revendication 1, pour lequel au moins un critère prédéterminé est en rapport avec un dispositif de véhicule automobile (100) qui est différent du dispositif de raccordement de véhicule (16).

3. Procédé selon la revendication 1 ou 2, pour lequel pour la détermination du mode prêt au chargement un dispositif de freinage (48) du véhicule automobile (100) doit être actif et/ou un élément de choix d'état de fonctionnement (37) du véhicule automobile (100) doit occuper un état prédéterminé.

4. Procédé selon l'une des revendications précédentes, pour lequel pour la détermination du mode prêt au chargement un signal prédéterminé (« ext ») de l'extérieur du véhicule automobile doit avoir été ou peut être transmis à celui-ci.

5. Procédé selon l'une des revendications précédentes, pour lequel pour la détermination du mode prêt au chargement la batterie à charger et/ou une autre unité fonctionnelle électrique du véhicule automobile doit ou doivent occuper un état prédéterminé et à cet effet un signal correspondant doit avoir été émis.

6. Procédé selon l'une des revendications précédentes, pour lequel l'appareil de commande (28) provoque le verrouillage qui est conçu afin de déterminer le remplissage d'un critère prédéterminé au moyen d'au moins un signal reçu.

7. Véhicule automobile (100) avec au moins un entraînement électrique (10) et une batterie (14), avec un dispositif de raccordement de véhicule (16) qui peut être couplé pour le chargement de la batterie (14) à un dispositif de raccordement extérieur (20) d'un poste de chargement (18) et peut être verrouillé au niveau de celui-ci, avec un appareil de commande (28) qui est conçu afin de
- vérifier selon au moins un critère prédéterminé si un mode prêt au chargement est donné, et
- verrouiller le dispositif de raccordement extérieur (20) au niveau du dispositif de raccordement de véhicule (16) lors de la détermination du mode prêt au chargement, dans lequel le chargement commence après le verrouillage,
**caractérisé en ce que**
l'appareil de commande (28) est couplé à une unité (34) qui est conçue afin de reconnaître une clé de transpondeur (36) portée par un conducteur de véhicule automobile (12) en cas de besoin, et que l'appareil de commande (28) est conçu afin de terminer le processus de chargement automatiquement lorsque le conducteur de véhicule (12) entre avec la clé de transpondeur (36) à proximité du véhicule automobile (100), et de poursuivre le processus de chargement après une durée prédéterminée, dans la mesure où une détection que le conducteur de véhicule automobile (12) retire une fiche (21) d'une douille (16) et/ou que le conducteur de véhicule automobile (12) ferme un bouchon de réservoir (22) et/ou qu'autrement la poursuite du procédé de chargement est rendue impossible, est cessée par l'appareil de commande (28).

8. Véhicule automobile (100) selon la revendication 7, pour lequel l'appareil de commande (28) est conçu afin de recevoir des signaux d'unités fonctionnelles (38 ; 49, 51 ; 53) du véhicule automobile (100) et de déterminer en fonction de tels signaux selon l'au moins un critère prédéterminé le mode prêt au chargement et de provoquer le verrouillage.
